# EUROPEAN PATENT APPLICATION

(11) **EP 3 978 588 A1**
(43) Date of publication of application: **06.04.2022**
(21) Application number: 20200026.1
(22) Date of filing: 05.10.2020
(51) Int. Cl.: C10M 169/06, F16C 25/06, F16C 33/10, C10N 20/02, C10N 20/00, C10N 20/06, C10N 40/02, C10N 50/10

(54) **THERMALLY CONDUCTIVE LUBRICANT**

(71) Applicant: ABB Schweiz AG, 5400 Baden (CH)
(72) Inventor: QIN, Jian, 723 49 Västerås (SE); MALEKSAEEDI, Saeed, 722 26 Västerås (SE); UNGE, Mikael, 722 46 Västerås (SE); LIU, Rongsheng, 723 48 Västerås (SE); SINGHA, Santanu, 722 28 Västerås (SE)
(74) Representative: Kransell & Wennborg KB

(57) **Abstract**

The present disclosure relates to a lubricant (1) with high thermal conductivity. The lubricant comprises a base oil, a polymeric thickener, and thermally conductive powder particles (3). The lubricant is, at atmospheric pressure, liquid above a transition temperature and a gel below said transition temperature. The present disclosure also relates to bearing (10) comprising the lubricant, as well as to a method of lubricating a bearing.

## Description

### TECHNICAL FIELD

The present disclosure relates to a lubricant gel comprising a base oil and a polymeric thickener.

### BACKGROUND

Bearings with rolling elements are lubricated with either of oil, grease or solid lubricants. Polymer-based lubricants are a new class of solid lubricants that have emerged. For applications where the hygienic standard is high such as in food and beverage plants, solid lubrication is desired to eliminate the risk of leakage of the lubricant which would lead to contamination of the working environment and product. Also, bearings lubricated with solid lubricants can better withstand harsh washdown condition than if grease or oil is used. Ingress of water and alkali containing detergent damages the lubricating properties of the oil or grease. Additionally, dry lubrication can eliminate the need for relubrication, reducing maintenance cost. However, there are limitations with dry lubrication that hinder a broader range of applications in spite of the benefits. Liquid lubricants such as oil and grease can act as heat transfer media during bearing operation to dissipate frictional heat more efficiently than solid lubricants. This limits the maximum rotational speed of solid lubricated bearings. For example, the maximum speed of a typical deep groove ball bearing is reduced by 60% when lubricated with solid lubricants. Also, the maximum operating temperature of solid lubricated bearings is lower than those lubricated with grease or oil.

### SUMMARY

It is an objective of the present invention to provide an improved lubricant, especially for bearings having rolling elements, such as roller or ball bearings.

According to an aspect of the present invention, there is provided a lubricant with high thermal conductivity. The lubricant comprises a base oil, a polymeric thickener, and thermally conductive powder particles. The lubricant is, at atmospheric pressure, liquid above a transition temperature and a gel below said transition temperature.

According to another aspect of the present invention, there is provided a bearing comprising rolling elements and an embodiment of the lubricant of the present disclosure. The bearing may comprise a solid structure arranged to separate the rolling elements from each other, the solid structure comprising pores holding the lubricant of the present disclosure.

According to another aspect of the present invention, there is provided a method of lubricating a bearing. The method comprises heating an embodiment of the lubricant of the present disclosure to a temperature above the transition temperature, whereby the lubricant liquifies. The method also comprises applying the liquid lubricant into the bearing. The method also comprises cooling the lubricant to a temperature below the transition temperature, whereby the lubricant gelifies.

By virtue of the transition temperature, the lubricant can be easily introduced into the bearing in liquid form above the transition temperature and function as a solid (i.e. not flowing) lubricant in gel form at operating temperatures below the transition temperature. By means of the thermally conductive powder, the thermal conductivity, and thus heat dissipating properties, of the lubricant is increased. Thus, the present invention provides a lubricant which may act as a solid lubricant but without the drawbacks of traditional solid lubricants.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic side view of a part of a bearing with rolling elements comprising an embodiment of the lubricant of the present invention.
Fig 2 is a schematic graph illustrating temperature dependence of viscosity of an embodiment of the lubricant of the present invention.
Fig 3 is a schematic flow chart of some embodiments of a method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

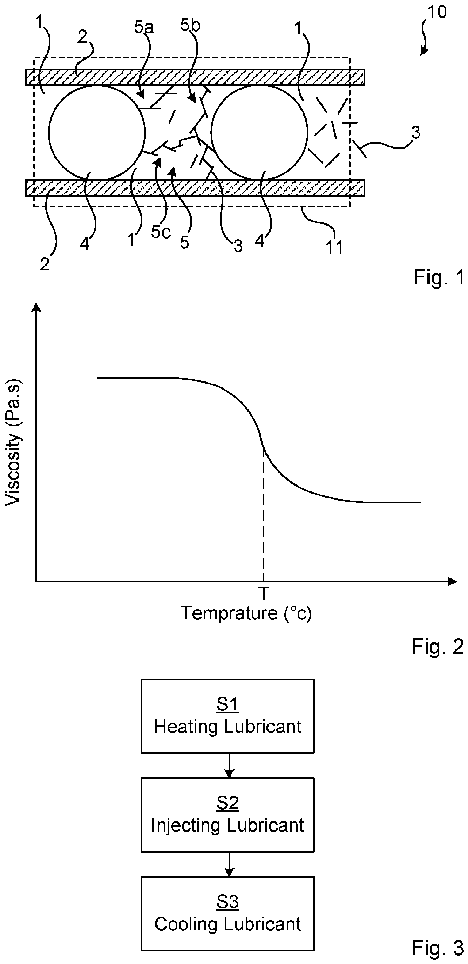

Figure 1 illustrates a part of a rolling-element bearing 10 having rolling elements 4, such as rolls or balls, arranged between races 2. A metal or polymer structural element (in solid form), herein called a solid structure 11 (schematically illustrated as a dashed box in figure 1), may be comprised in the bearing 10, e.g. in the form of a bearing cage (also called retainer) which may be used in the bearing 10 to separate the rolling elements 4 from each other and/or to hold the bearing 10 together. At least a part of the space between the races 2 which is not taken up by the rolling elements 4 is filled with a lubricant 1 in gel form. It should be noted that another part of said space, typically a major part, may not be filled with the lubricant, instead being filled with e.g. air or other ambient medium. Figure 1 may thus exaggerate the presence of the lubricant 1 for illustrative purposes.

In accordance with the present invention, the lubricant 1 comprises thermally conductive particles 3 of a thermally conductive powder added to the lubricant during preparation thereof. By means of the thermally conductive particles 3, the thermal conductivity, and thus the heat dissipating ability, of the lubricant 1 is improved (i.e. increased). Preferably, the thermally conductive particles 3 form a percolated network 5 in the lubricant 1, further improving the thermal conductivity of the lubricant 1. For instance, the percolated network 5 may comprise bridges 5a between a rolling element 4 and a race 2 of particles 3 in thermally conductive contact with each other. Similar bridges 5b and 5c within the percolated network 5 may be formed between the races 2 and/or between two adjacent rolling elements 4.

Whether a percolated network 5 may be formed may depend on the amount of the particles 3 in combination with the shape of said particles, where a higher aspect ratio of the particles typically results in a percolated network at lower amounts of particles than if the particles are e.g. substantially spherical. In some embodiments of the present invention, the thermally conductive powder particles 3 are present in an amount within the range of 1-30 wt% of the lubricant 1, preferably within the range of 6-15 wt% of the lubricant 1. An amount in a lower part of the range may be used if the particles have a high aspect ratio, while an amount in a higher part of the range may be used in the particles have a lower aspect ratio. Shapes of the particles 3 having high aspect ratio may include flakes, rods and/or ellipsoids. In some embodiments, thermally conductive powder particles 3 have an average (e.g. number or weight average) aspect ratio of at least 1:10 such as within the range of 1:10 to 1:100. Alternatively, the aspect ratio of all or substantially all particles 3 of the powder may, e.g. by means of sieving, be within the range of 1:10 to 1:100. The aspect ratio may be determined e.g. by means of microscopy or spectroscopy, e.g. laser diffraction analysis. The particle size (e.g. the average longest diameter) of the thermally conductive powder particles 3 may be within the range from 1 µm to 100 µm, preferably from 20 to 80 µm. The particle size may be determined by means of microscopy or spectroscopy, e.g. laser diffraction analysis.

The thermally conductive particles 3 may be of any thermally conductive material, e.g. comprising any of: boron nitride (BN) e.g. hexagonal BN (h-BN) and/or a graphene material e.g. graphene, modified graphene and/or any graphene oxide, and/or any metal oxides such as Fe₃O₄, Fe₂O₃, ZnO, Al₂O₃, SiO₂, CeO₂, TiO₂ and/or MgO. Preferably the particles 3 are of or comprise h-BN and/or graphene, especially h-BN which has been found to have excellent thermally conductive properties and to combine well with other constituents of the lubricant 1.

There may be limited possibility for phonons and vibrations at particle-particle interface to jump from one particle 3 to the next. The heat conduction between particles 3 which are in thermally conductive contact with each other may in some embodiments be improved by modifying the surfaces of the particles. For instance, thermally conductive molecules, functioning as thermal connectors, may be coated, grafted or otherwise fastened to the surfaces of the particles 3. The thermal connectors may e.g. be grafted on the surfaces of the particles 3, e.g. h-BN or graphene flakes. These thermal connectors may, at the interface between particles 3 provides a bridge for thermal carriers to move from one particle to the other. The thermally conductive molecules are preferably molecules able to bind to each other to form a bridge between the particles 3, such that molecules fastened to a surface of a first particle 3 are able to bind to molecules fastened to a corresponding surface of an adjacent second particle 3, e.g. unsaturated hydrocarbons such as alkenes. The thermally conductive molecules may e.g. bind to each other by means of hydrogen or covalent bonds to crosslink the particles 3. It is especially envisioned that ethylene can act well as thermally conductive molecules.

Thermally conductive particles may be used as additive to a polymer of the solid structure 11 and may thus, if e.g. 3D printed, be co-printed with the polymer to form the structure. Such thermally conductive particles may of any thermally conductive material, e.g. comprising any of: boron nitride (BN) e.g. hexagonal BN (h-BN) and/or a graphene material e.g. graphene, modified graphene and/or any graphene oxide, and/or any metal oxides such as Fe₃O₄, Fe₂O₃, ZnO, Al₂O₃, SiO₂, CeO₂, TiO₂ and/or MgO. Preferably the particles 3 are of or comprise h-BN and/or graphene, especially h-BN. The thermally conductive particles of the structure may be of the same material as the thermally conductive particles 3 of the lubricant.

In some embodiments of the present invention, the lubricant 1 (especially in its gel form) can fill pores in a solid structure 11 of the bearing 10, e.g. a retainer or cage thereof which typically is arranged to separate the rolling elements 4 from each other in the bearing 10. Such a solid structure 11 with pores suitable for holding the lubricant may be obtained by means of 3D printing. The structure, e.g. a bearing cage, may be made of a polymeric material, and may have denser structural features at a load-bearing centre and a less dense, more porous, structure near the rolling elements 4. It may be possible to control the porosity of the structure material by designing and optimization of printing process. The structure may have a gradient porosity. Large pores (e.g. above 1 mm in diameter) may retain more lubricant while small pores (e.g. having a diameter within the range of 20-100 µm), e.g. close to a surface of the structure (and thus close to the rolling elements 4), may allow the lubricant to be slowly released from the structure. Examples of polymers for the structure include any of e.g. polyamide 66 and/or polyamide 46.

By means of the 3D printing manufacturing, pores of the structure may be formed near the bearing rolling elements 4 to take up the lubricant 1. Optionally, at the same time, denser parts of the structure may be printed arranged to be further away from the rolling elements 4 and to bear the load the structure is subjected to during use. This dual function of a density gradient within the structure (load bearing and porous lubricant holding) would be difficult to obtain without the use of 3D printing.

3D printing of the structure maybe able to save tooling cost for various sizes of bearings 10 and save production time, but it may also introduce features which are impossible to be manufactured by conventional methods such as the density/porosity differences mentioned above.

Figure 2 illustrates the temperature dependence of viscosity of a lubricant 1 of the present invention. At a transition temperature T, the viscosity of the lubricant changes between liquid (at higher temperatures) and gel (at lower temperatures). The transition temperature T may conveniently be within the range of 100-160°C. In its liquid form, at temperatures above the transition temperature T, the lubricant may easily be injected into a bearing 10. In its gel form, at temperatures below the transition temperature T, the lubricant is substantially not flowing on its own accord (by gravity alone) whereby the risk of leakage and contamination by the lubricant outside of the bearing 10 is reduced. For instance, the lubricant 1 may below the transition temperature T have a viscosity index (VI) of at least 200, 300, 500, 800 or 1000, such as within the range of 200-1000, 500-1000 or 800-1000.

The viscosity, and its temperature dependence, depends on the polymeric thickener used and the amount thereof, in combination with the base oil, the thermally conductive powder and any other additives (constituents) of the lubricant 1. For instance, the polymeric thickener may be present in an amount within the range of 0.001-50 wt% of the lubricant, preferably within the range of 5-20 wt% of the lubricant. Generally, the higher the molecular weight of the thickener used, the higher the transition temperature T becomes.

Any polymeric thickener, which interacts well with the base oil and provides a transition temperature T at a desired temperature, may be used. For instance, the polymeric thickener may be or comprise a (hydrogenated) styrenic thermoplastic elastomer such as a styrenic block copolymer, e.g. a tri-block copolymer such as polystyrene-b-poly(ethylene-ethylene/propylene)-b-polystyrene, polystyrene-b-poly(ethylene/propylene)-b-polystyrene and/or polystyrene-b-poly(ethylene/butylene)-b-polystyrene, and/or a di-block copolymer such as polystyrene-b-poly(ethylene/propylene), preferably polystyrene-b-poly(ethylene-ethylene/propylene)-b-polystyrene. Such polymeric thickeners are commercially available from e.g. Kuraray with its SEPTON^{™} series of hydrogenated styrenic thermoplastic elastomers such as SEEPS 4077, SEEPS 4055, SEEPS 4044, SEEPS 4033, SEEPS 4099, SEP 1020, SEBS 8006, SEPS 2006, or from Kraton^{™} e.g. A1535, G1651, G1641, G1707.

Any suitable base oil may be used, e.g. a base oil which is or comprises a mineral oil, an iso-paraffinic oil and/or a hydrocarbon oil.

Other conventional additive(s) may also be comprised in the lubricant, e.g. an antioxidant such as butylated hydroxytoluene (DBPC, C₁₅H₂₄O) or Irganox^{™} L 107 (C₃₅H₆₂O₃).

Figure 3 illustrates some embodiments of a method of lubricating a bearing 10. The lubricant 1 of the present disclosure is heated S1 to a temperature above the transition temperature T whereby the lubricant liquifies (i.e. the lubricant transitions from a solid/gel form to a liquid form). Then, the liquid lubricant is applied S2 into the bearing 10, e.g. by injection, 3D printing or impregnation such as by immersing the bearing in a lubrication bath, in some embodiments preferably by injection. Then, the lubricant 1 is cooled S3 to a temperature below the transition temperature (T) whereby the lubricant gelifies (the lubricant transitions from a liquid form to a solid/gel form).

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A lubricant (1) with high thermal conductivity, comprising:
a base oil;
a polymeric thickener; and
thermally conductive powder particles (3);
the lubricant being, at atmospheric pressure, liquid above a transition temperature (T) and a gel below said transition temperature.

2. The lubricant of claim 1, wherein the thermally conductive powder particles (3) are present in an amount within the range of 1-30 wt% of the lubricant, preferably within the range of 6-15 wt%.

3. The lubricant of any preceding claim, wherein the thermally conductive powder particles (3) have an average aspect ratio of at least 1:10 such as within the range of 1:10 to 1:100.

4. The lubricant of any preceding claim, wherein the thermally conductive powder particles (3) form a percolated network (5) in the lubricant (1).

5. The lubricant of any preceding claim, wherein the thermally conductive powder particles (3) are surface modified with thermally conducive molecules, e.g. ethylene, able to bond with each other to improve thermal conductivity between the particles (3).

6. The lubricant of claim 5, wherein at least one of the thermally conducive molecules of a first particle of the thermally conductive powder particles (3) is bound, e.g. by hydrogen or covalent bonds, to at least one of the thermally conducive molecules of a second particle of the thermally conductive powder particles (3).

7. The lubricant of any preceding claim, wherein the thermally conductive powder particles (3) comprise any of: boron nitride, BN, e.g. hexagonal BN, h-BN; and/or a graphene material e.g. graphene, modified graphene and/or any graphene oxide; and/or any metal oxide e.g. Fe₃O₄, Fe₂O₃, ZnO, Al₂O₃, SiO₂, CeO₂, TiO₂ and/or MgO; preferably h-BN and/or graphene, especially h-BN.

8. The lubricant of any preceding claim, wherein the lubricant (1), at a temperature below the transition temperature (T), has a viscosity index, VI, of at least 200, 300, 500, 800 or 1000, such as within the range of 200-1000, 500-1000 or 800-1000.

9. The lubricant of any preceding claim, wherein the transition temperature (T) is within the range of 100-160°C.

10. The lubricant of any preceding claim, wherein the polymeric thickener is or comprises a styrenic thermoplastic elastomer such as a styrenic block copolymer, e.g. a tri-block copolymer such as polystyrene-b-poly(ethylene-ethylene/propylene)-b-polystyrene, polystyrene-b-poly(ethylene/propylene)-b-polystyrene and/or polystyrene-b-poly(ethylene/butylene)-b-polystyrene, and/or a di-block copolymer such as polystyrene-b-poly(ethylene/propylene), preferably polystyrene-b-poly(ethylene-ethylene/propylene)-b-polystyrene.

11. The lubricant of any preceding claim, wherein the polymeric thickener is present in an amount within the range of 0.001-50 wt% of the lubricant, preferably within the range of 5-20 wt%.

12. The lubricant of any preceding claim, wherein the base oil is or comprises a mineral oil, an iso-paraffinic oil and/or a hydrocarbon oil.

13. A bearing (10) comprising:
rolling elements (4) and
a solid structure (11) arranged to separate the rolling elements (4) from each other, the solid structure (11) comprising pores holding the lubricant (1) of any preceding claim.

14. The bearing of claim 13, wherein the solid structure (11) comprises thermally conductive powder particles, e.g. of the same material as the thermally conductive powder particles (3) of the lubricant (1).

15. A method of lubricating a bearing (10), the method comprising:
heating (S1) the lubricant (1) of any claim 1-12 to a temperature above the transition temperature (T) whereby the lubricant liquifies;
applying (S2) the liquid lubricant (1) into the bearing (10); and
cooling (S3) the lubricant (1) to a temperature below the transition temperature (T) whereby the lubricant gelifies.
